(19) Europäisches Patentamt
European Patent Office
Office européen des brevets

(11) **EP 2 270 712 A1**

(12) **EUROPEAN PATENT APPLICATION**

(43) Date of publication:
**05.01.2011 Bulletin 2011/01**

(51) Int Cl.:
**G06K 9/00** (2006.01)

(21) Application number: **09164184.5**

(22) Date of filing: **30.06.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Koninklijke Philips Electronics N.V.
5621 BA Eindhoven (NL)**

(72) Inventor: **The designation of the inventor has not yet been filed**

(74) Representative: **Damen, Daniel Martijn
Philips
Intellectual Property & Standards
P.O. Box 220
5600 AE Eindhoven (NL)**

(54) **Quality detection method and device for cell and tissue samples**

(57) The present invention relates to a method for the assessment of a biological sample, comprising the steps of (a) obtaining a UV radiation reaction image of a biological sample; (b) establishing at least one of the following parameters: the size of a cell, the morphology of a cell, the number of cells, the ratio between cytoplasm and nucleus of a cell and the optical density of the nucleus of a cell present on said UV radiation reaction image; and (c) determining the percentage of epithelial cells present on said UV radiation reaction image based on the outcome of step (b). The present invention is especially suited for the assessment of squamous or glandular cells and particularly relates to the analysis of biological smear samples, e.g. cervical smear samples. In a further aspect the present invention relates to a device comprising a means for obtaining a UV radiation reaction image, a means for establishing the size of a cell, the morphology of a cell, the shape of a cell, the number of cells, the ratio between cytoplasm and nucleus of a cell and the optical density of the nucleus of a cell present on said UV radiation reaction image; and a means for determining the percentage of epithelial cells of cells present on said UV radiation reaction image, as well as a use of such a device for the assessment of a biological sample.

Fig. 3

**Description**

FIELD OF THE INVENTION

The present invention relates to a method for the assessment of a biological sample, comprising the steps of (a) obtaining a UV radiation reaction image of a biological sample; (b) establishing at least one of the following parameters: the size of a cell, the morphology of a cell, the number of cells, the ratio between cytoplasm and nucleus of a cell and the optical density of the nucleus of a cell present on said UV radiation reaction image; and (c) determining the percentage of epithelial cells present on said UV radiation reaction image based on the outcome of step (b). The present invention is especially suited for the assessment of squamous or glandular cells and particularly relates to the analysis of biological smear samples, e.g. cervical smear samples. In a further aspect the present invention relates to a device comprising a means for obtaining a UV radiation reaction image, a means for establishing the size of a cell, the morphology of a cell, the shape of a cell, the number of cells, the ratio between cytoplasm and nucleus of a cell and the optical density of the nucleus of a cell present on said UV radiation reaction image; and a means for determining the percentage of epithelial cells of cells present on said UV radiation reaction image, as well as a use of such a device for the assessment of a biological sample.

BACKGROUND OF THE INVENTION

The diagnosis of many diseases, in particular cancer, is based on cytological methods and approaches. A typical cytological analysis is performed on biological samples of cells or tissue samples. Collected specimens are generally spread on a substrate, for instance a microscope glass slide, before further processing and analysis. A successful processing, analysis and diagnosis is largely dependent on the quality of the collected sample, i.e. on parameters like the amount of cells, the type of cells or the integrity of the cells. A practitioner is hence required to perform the sample-taking procedure so accurately that subsequent analysis steps become possible. Yet, there is generally no way to check the sample before providing it to the pathologist, i.e. there is no quality assessment performed during or directly after the sample-taking procedure. Although technological efforts have lead to an improvement of cytological screening, e.g. via the introduction of new sampling instruments and techniques, the quality of the obtained samples is still generally not assessed.

Inadequate sample, however, may result in an increased number of false negative diagnoses. For instance, of the over 50 million cervical cytological Pap smears, which are performed in the USA each year, a high false-negative interpretation rate of 20-40% has been described (Williams et al., 1998, Proc. Natl. Acad. Sci. USA 95, 14932), frequently leading to fatal consequences. Most of these false negatives are the result of an inadequate sample taking. Additionally, if a sample is categorized as inadequate, e.g. during a subsequent analysis procedure carried out in a pathology laboratory, it may become necessary to ask the patient for a second, new cell or tissue sample, which is time-consuming, costly and cumbersome.

A reason for the lack of suitable sampling test procedures may be contributable to the fact that traditional cell testings, i.e. counting and classification schemes require the complex process of cell staining. Furthermore, histological analyses of stained cells are generally considered to be suboptimal and are not preferred by pathologists.

As an alternative to the dissection of stained cells, the cells' auto fluorescence may be used in order to visualize, count and classify them. Main contributions to auto fluorescence come from NADH (in particular from the mitochondria) as well as from extracellular collagen (Drezek et al., 2001, J. of Biomedical Optics, 6: 385). However, collagen is mainly present in the deeper lying stromal tissue, and, thus, not derivable from, e.g. top epithelial layers. Moreover, extracellular matrixes comprising collagen structures tend to disrupt upon sample taking. On the other hand, based on the presence of NADH it is difficult, if not impossible, to distinguish separate cells, in particular in areas that are highly populated with cells, i.e. where cells are touching and/or are overlapping. Furthermore, once the cells are outside the body NADH tends to rapidly degrade due to the breakdown of metabolic processes in the cells.

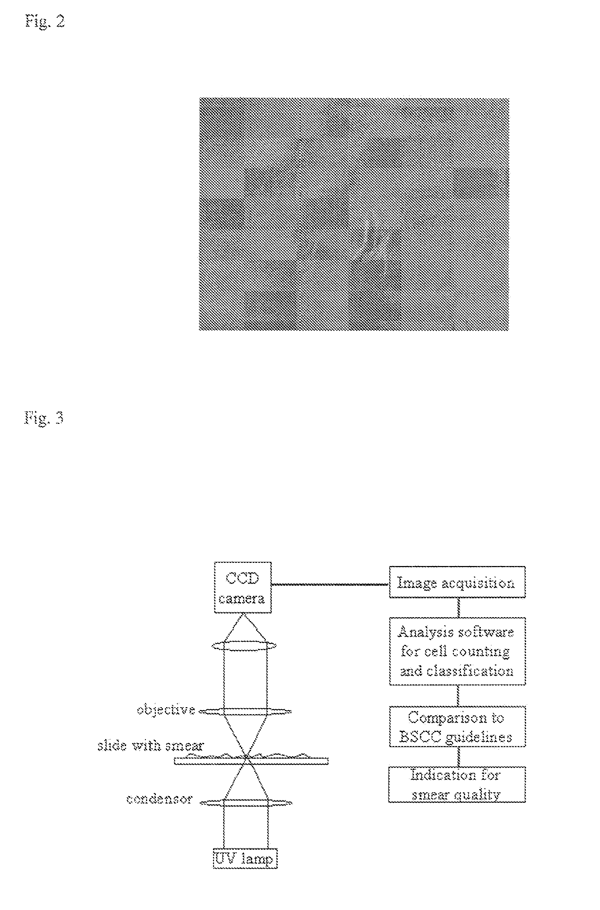

A further alternative is the use of phase contrast microscopy which allows to visualize unstained cells and even to discern their nuclei, although the contrast between the nucleus and the cytoplasm is not large. Yet, in order to permit a successful recognition of individual cells, the cells must be unfolded and well separated from each other. Thus, in many samples, especially in areas of the specimen which comprise a high number of cells, the distinction between cells and the discernability of the nuclei tend to vanish entirely (see Fig. 2).

Thus, neither cellular auto fluorescence, nor phase contrast microscopic approaches can be used in an effective and straightforward manner in order to allow for a reasonable sample testing. There is, hence a need for an efficient, fast and reliable method for the assessment of a biological sample as well as for means to carry out such a method.

OBJECTS AND SUMMARY OF THE INVENTION

The present invention addresses this need and provides methods and means for the assessment of a biological sample. The above objective is in particular accomplished by a method for the assessment of a biological sample, comprising the steps of : (a) obtaining a UV radiation reaction image of a biological sample; (b) establishing at least one of the following parameters: the size of a cell, the morphology of a cell, the number of cells, the ratio between cytoplasm and nucleus of a cell and the optical density of the nucleus of a cell present on said UV radiation reaction image; and (c) determining the percentage of epithelial cells present on said UV radiation reaction image based on the outcome of step (b).

Such a method visualizes cells without any staining up to a degree of cellular and compartment distinguishability which allows to efficiently segment the cells, count their number and reliably classify them according to their histological provenience. This allows for a straightforward and trustworthy estimate of the sample quality. The outcome of this analysis is a measure of the quality of the sample and may be used by the practitioner as a starting point for deciding to perform additional histological or molecular analyses with the sample or to take a new sample.

In a preferred embodiment of the present invention the UV radiation reaction image is obtained with an UV microscope.

In a further preferred embodiment of the present invention the UV radiation reaction image is obtained at a wavelength of between about 250 nm to 300 nm. Particularly preferred is the use of a wavelength of about 260 nm or about 280 nm.

In another preferred embodiment of the present invention the size of a cell, the morphology of a cell, the number of cells, the ratio between cytoplasm and nucleus of a cell and/or the optical density of the nucleus of a cell present on an UV radiation reaction image as mentioned herein above is established with a means for image and/or form recognition. Said means for image and/or form recognition is preferably configured to determine a value indicative of the size of a cell, the morphology of a cell, the number of cells, the ratio between cytoplasm and nucleus of a cell and/or the optical density of the nucleus of a cell.

In a further preferred embodiment of the present invention the means for image and/or form recognition as mentioned herein above is a picture and/or form recognition data processor, a picture and/or form recognition software or a picture and/or form recognition program.

In a further preferred embodiment of the present invention the epithelial cell as mentioned above is a squamous cell or a glandular cell.

In another embodiment of the present invention the method of the present invention as described herein above comprises as additional step (d) the step of comparing the outcome of steps (b) and/or (c) with a reference database.

In a preferred embodiment of the present invention said reference database is the British Society for Clinical Cytology (BSCC) look-up table or the Bethesda System database (Bethesda system for reporting cervical/vaginal cytological diagnoses, 1993, Acta Cytol. 37, 115).

In a further embodiment of the present the biological sample as mentioned herein above is a tissue sample, a biopsy sample, a brushing sample, a fine-needle-aspiration sample or a smear sample.

In a preferred embodiment of the present invention said smear sample is a cervical smear sample.

In a further aspect the present invention relates to a device, comprising a means for obtaining a UV radiation reaction image; a means for establishing the size of a cell, the morphology of a cell, the number of cells, the ratio between cytoplasm and nucleus of a cell and the optical density of the nucleus of a cell present on said UV radiation reaction image; and a means for determining the percentage of epithelial cells of cells present on said UV radiation reaction image.

In a preferred embodiment of the present invention the means for obtaining a UV radiation reaction image as mentioned herein above is a UV microscope. In a particularly preferred embodiment said means for obtaining a UV radiation reaction image is a UV microscope using radiation of a wavelength of about 250 to 300 nm, more preferably using radiation of a wavelength of about 260 nm or about 280 nm.

In a further preferred embodiment of the present invention the means for establishing the size of a cell, the morphology of a cell, the number of cells, the ratio between cytoplasm and nucleus of a cell and the optical density of the nucleus of a cell present on said UV radiation reaction image as mentioned herein above is a data processing unit, a computer or an electronic device. Such a data processing unit, computer or electronic device is typically capable of performing a picture-recognition algorithm and/or of performing a form-recognition algorithm.

In a further preferred embodiment said means for determining the percentage of epithelial cells of cells present on said UV radiation reaction image is a data processing unit, a computer or an electronic device capable of performing a comparison algorithm.

In a further aspect the present invention relates to the use of a device as defined herein above for the assessment of a biological sample. In a preferred embodiment of the present invention said sample is a tissue sample, a biopsy sample, a brushing sample or a fine-needle-aspiration sample. In a particularly preferred embodiment of the present invention said sample is a smear sample. In an even more preferred embodiment of the present invention said sample is a cervical smear sample.

BRIEF DESCRIPTION OF THE DRAWINGS

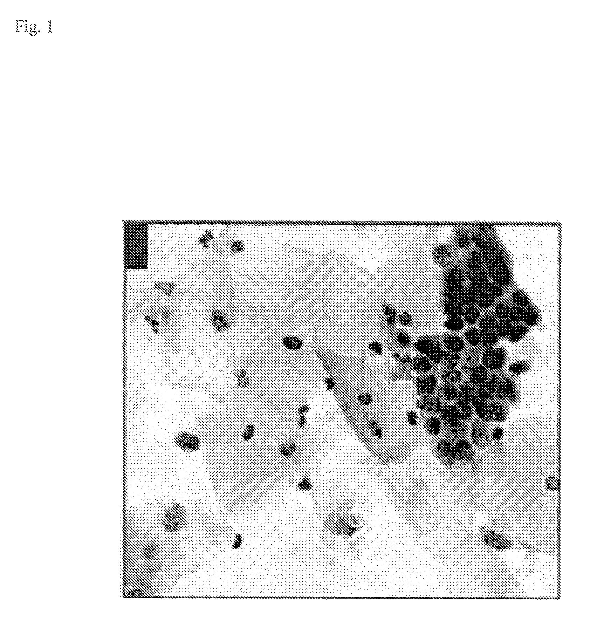

Fig. 1: Microscope picture of a part of a pap smear with benign squamous and endocervical cells (Papanicolaou staining, ×400 magnification, grayscale reproduction; derived from Am. J. Clin. Pathol, Medscpae, 2008). The squamous cells are flat, with a large ratio between the area of the cytoplasm and the nucleus.

Fig. 2: Phase contrast microscope picture of a group of cells. Two cells in the left half of the picture are reasonably distinguishable since nuclei are clearly visible. However, a group of cells in the lower right part of the picture are not distinguishable from each other, and also their nuclei are not discernable.

Fig. 3: Example of a quality checking device based on UV radiation reaction microscopy according to the invention. The device comprises a UV lamp, a condensor, a slide comprising the sample to be analyzed, an objective, a CCD camera, a means for image acquisition, a means for cell counting and cell classification and a comparison means leading to the indication of the sample quality.

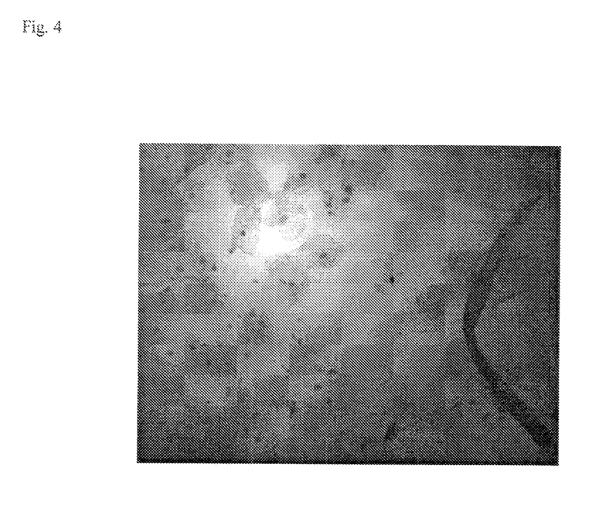

Fig. 4: UV radiation reaction microscope image of an oral epithelial cell nucleus and its surrounding cytoplasm, taken at a wavelength of 248 nm.

DETAILED DESCRIPTION OF THE EMBODIMENTS

The present invention relates to methods and means for the assessment of a biological sample comprising the visualization of cells without any staining up to a degree of cellular and compartment distinguishability which allows to efficiently segment the cells, count their number and reliably classify them according to their histological provenience.

Although the present invention will be described with respect to particular embodiments, this description is not to be construed in a limiting sense.

Before describing in detail exemplary embodiments of the present invention, definitions important for understanding the present invention are given.

As used in this specification and in the appended claims, the singular forms of "a" and "an" also include the respective plurals unless the context clearly dictates otherwise.

In the context of the present invention, the terms "about" and "approximately" denote an interval of accuracy that a person skilled in the art will understand to still ensure the technical effect of the feature in question. The term typically indicates a deviation from the indicated numerical value of $\pm 20$ %, preferably $\pm 15$ %, more preferably $\pm 10$ %, and even more preferably $\pm 5$ %.

It is to be understood that the term "comprising" is not limiting. For the purposes of the present invention the term "consisting of" is considered to be a preferred embodiment of the term "comprising of". If hereinafter a group is defined to comprise at least a certain number of embodiments, this is meant to also encompass a group which preferably consists of these embodiments only.

Furthermore, the terms "first", "second", "third" or "(a)", "(b)", "(c)", "(d)" etc. and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In case the terms "first", "second", "third" or "(a)", "(b)", "(c)", "(d)" etc. relate to steps of a method or use there is no time or time interval coherence between the steps, i.e. the steps may be carried out simultaneously or there may be time intervals of seconds, minutes, hours, days, weeks, months or even years between such steps, unless otherwise indicated in the application as set forth herein above or below.

It is to be understood that this invention is not limited to the particular methodology, protocols, reagents etc. described herein as these may vary. It is also to be understood that the terminology used herein is for the purpose of describing particular embodiments only, and is not intended to limit the scope of the present invention that will be limited only by the appended claims. Unless defined otherwise, all technical and scientific terms used herein have the same meanings as commonly understood by one of ordinary skill in the art.

As has been set out above, the present invention concerns in one aspect a method for the assessment of a biological sample, comprising the steps of : (a) obtaining a UV radiation reaction image of a biological sample; (b) establishing at least one of the following parameters: the size of a cell, the morphology of a cell, the number of cells, the ratio between cytoplasm and nucleus of a cell and the optical density of the nucleus of a cell present on said UV radiation reaction image; and (c) determining the percentage of epithelial cells present on said UV radiation reaction image based on the outcome of step (b).

The term "biological sample" as used herein refers to any specimen obtained from a biological organism, preferably a living organism. The term relates also to specimen obtained from non-living, i.e. dead biological organisms, in particular recently deceased organisms. The term "biological organism" includes in general eukaryotic systems and may also comprise sub-portions of eukaryotic systems. In particular, such organisms include higher eukaryotes. In preferred embodiments of the present invention a biological sample may be derived from an animal, preferably from a mammal, e.g. from a cat, a dog, a swine, a horse, a cattle, a sheep, a goat, a rabbit, a rat, a mouse, a monkey. Particularly preferred is a sample obtained from a human being.

The term "obtaining a UV radiation reaction image" as used herein refers to a technique of subjecting an object to electromagnetic radiation with a wavelength shorter than that of visible light, but longer than x-rays and grabbing the reflected or non-absorbed electromagnetic radiation with a suitable receiving unit. The source of the electromagnetic radiation may be at the opposite side of the object to be analyzed, resulting in transmitted or non-absorbed or non-reflected radiation arriving at the receiving unit. The term "at the opposite side" means that the radiation is emitted in a direction having an angle of between about 135° to 180°, preferably between about 160° and 180° with respect to the object to be analyzed. Alternatively, the source of electromagnetic radiation may be located at the same side as the object to be analyzed, resulting in reflected radiation arriving at the receiving unit. The term "at the same side" means that the radiation is emitted in a direction having an angle of between about 0° to 45°, preferably between about 20° and 0° with respect to the object to be analyzed. Also encompassed by the present invention is a lateral localization of the source of electromagnetic radiation, where the direction of radiation is emitted in a direction having an angel of between about 45° to 135°, preferably about 90° with respect to the object to be analyzed. A position of 0° is to be understood as a position being perpendicular above the objection to be analyzed.

Sources of electromagnetic radiation may be any suitable radiation source known to the person skilled in the art, for instance, a UV lamp or a laser light source or a set of laser light sources emitting UV light of a wavelength of between 10 nm to 400 nm, and/or energies from about 3 eV to 124 eV. Examples of electromagnetic radiation sources to be use in the context of the present invention are a mercury UV lamp, preferably a low-pressure mercury UV-lamp or a high-pressure mercury UV-lamp. The electromagnetic radiation source may also be a LED lamp, e.g. an UV-LED lamp, or a laser light source or a set of laser light sources emitting, inter alia or exclusively, UV light, e.g. a broad band laser.

In an embodiment of the present invention the wavelength of the electromagnetic radiation may be adjusted according to several parameters, e.g. the nature of the object to the analyzed, the position of the radiation source or optical elements to be used.

In a further embodiment the power of radiation may be changed or adjusted according to several parameters, e.g. the nature of the object to the analyzed, the position of the radiation source or optical elements to be used. The power of the radiation as applied on the object generally depends on the radiation source and the distance between the radiation source and the object to be analyzed.

In addition or alternatively, the amount of energy transmitted via the electromagnetic radiation may be changed or adjusted. For instance, the total amount of energy to be applied may be calculated with the formula $D = P \cdot T$, wherein D is the total amount of energy applied onto the object in $mJ/cm^2$, P is the power of the light as applied on the object in $mW/cm^2$ and T is the time during which the radiation is applied in seconds.

The term "UV radiation reaction" as used herein refers to the reaction of an object to be analyzed, i.e. a biological sample, after the impact of electromagnetic radiation with a wavelength shorter than that of visible light, but longer than x-rays. Such a reaction may be the reflection of electromagnetic radiation, the transmission of electromagnetic radiation, the absorption of electromagnetic radiation, the polarization of electromagnetic radiation and/or the elicitation of fluorescence radiation of an object to be analyzed. One or more of such reactions may be registered in the form of an image, which reflects the corresponding reaction and, thus, allows a conclusion on the underlying cellular or biological nature, form, structure, status etc.

Electromagnetic radiation to be used in this context may be modified either before or after having generated a reaction with the object to be analyzed. For instance, the electromagnetic radiation may be concentrated and/or focused by one or more optical elements, e.g. one or more lenses or one or more condensor units etc. In a typical embodiment several lenses or condensers which vary in their maximum and minimum numerical aperture and/or the diameter of the aperture may be used and/or combined. Such elements may be positioned in a suitable distance to the source of electromagnetic radiation and/or the object to be analyzed. The distance may be varied according to the optical elements used, the wavelength of the electromagnetic radiation, the type of radiation source used and/or the nature of the object to be analyzed. The term "nature of the object" as used herein refers to parameters like the thickness of the object, the number of cell layers present, the density of cells, the number of cells per defined area, the size of cells, the size of nuclei present etc.

Typically, the amount of energy of the electromagnetic radiation to be applied may be increased with increasing thickness, increasing number of cell layers, increasing density of cells or the number of cells per defined area.

The object to be analyzed may be present on any suitable substrate known to the person skilled in the art. Preferably, the object, i.e. a biological sample, is present on a transparent substrate which allows the penetration of electromagnetic radiation, in particular UV light. Examples of transparent substrates are glass substrates, plastic or synthetic substrates. e.g. polystyrene substrates or derivates thereof, polycarbonate or cyclic olefin copolymer substrates or cyclic olefin polymer substrates. Particularly preferred are quartz substrates, especially fused quartz substrates, as well as fused silica substrates or fused calcium fluoride substrates.

These substrates may be covered with suitable coatings. An example of such a coating to be used in the context of the present invention is a coating with poly-L-lysine, which belongs to the group of cationic surfactants. It contains positively charged hydrophilic (amino) groups and hydrophobic (methylene) groups and is known to interact with nucleic acid molecules. Alternatively, the substrate may be treated by silanation, e.g. with epoxysilane or amino-silane or be treated with polyacrylamide.

Substrates comprising the object to be analyzed, i.e. a biological sample, may in a specific embodiment be covered with a protective shielding, e.g. a further substrate, glass layer or cover-slip. Such additional substrates may be used in accordance with the object type, the degree of dryness of the object to be analyzed, the optical elements in employment etc.

In addition or alternatively, the object to be analyzed may be fixated with any suitable means or by applying any suitable technique known to the person skilled in the art. For example, the object to be analyzed, i.e. the biological sample, may be fixated by air drying, by applying heat fixation, or by immersing the object in a fixative, preferably in a fixative of a volume at a minimum of 20 times greater than the volume of the object or sample to be fixed allowing the fixative to diffuse through the tissue. Examples of fixatives which may be used in the context of the present invention are formaldehyde, glutaraldehyde, potassium dichromate, chromic acid, potassium permanganate, ethanol, methanol, acetone, acetic acid, picric acid and mercuric chloride. In a specific embodiment of the present invention the object to be analyzed may not be fixated by any known fixation method.

Electromagnetic radiation received from the object to be analyzed, e.g. via reflection or transmission of radiation, via fluorescence or radiation which has not been absorbed by the object may subsequently be received by one or more additional optical elements. Typically, such radiation may be received by an objective. The term "objective" as used herein refers to an element which gathers the radiation coming from an object being observed, and focuses the rays to produce a real image. Objectives to be used in the context of the present invention may be characterized by two parameters, namely the magnification and the numerical aperture. The magnification may have any suitable value. Typically it will range from 5× to 10.000×. The numerical aperture may also have any suitable value, typically ranging from 0.14 to 1.3. As objective any suitable objective known to the person skilled in the art may be used. Examples of specific objective types which are contemplated by the present invention are non-immersion or normal objectives, oil-immersion objectives and water-immersion objectives. Depending on the type of objective the preparation and/or presentation of the biological sample may be adapted. For example, in order to use oil-immersion objectives or techniques, the samples and/or a cover-slip between the sample and the objective, as well as the objective itself may be immersed in oil, preferably in a transparent oil of high refractive index. In order to use, for instance, water-immersion objectives or techniques, the samples and/or a cover-slip between the sample and the objective, as well as the objective itself may be immersed in water. The numerical aperture of the objective may be adapted according to the technique used, e.g. for water-immersion approaches the numerical aperture may preferably be between 1 and 1.3.

Additionally or alternatively filter elements may be present, which may filter certain wavelengths or wavelength spectra or reduce the energy of electromagnetic radiation. Such filter elements may be present between the source of electromagnetic radiation and the object to be analyzed or between the object to be analyzed and an image grabbing unit. As filter any suitable filter known to the person skilled in the art may be used. Examples of filters to be used are a UV A filter, a UV B filter, a filter for visible light, polarization filters etc.

Images received from an objective or received from the object to be analyzed directly may be captured or grabbed with any suitable photographic and/or picture/image recording unit. Examples of such units are a CCD camera, a digital optical camera, a mechanical or optical camera etc.

Images received from an objective or received from the object to be analyzed directly may be obtained in any suitable resolution, e.g. at a resolution of between about 100 dpi to 3000 dpi, typically at 100 dpi, 200 dpi, 250 dpi, 300 dpi, 350 dpi, 400 dpi, 450 dpi, 500 dpi, 550 dpi or 600 dpi.

Images may be received for any suitable area of a sample to be analyzed. Images may, for example, be obtained for the entire area of a sample or object. Alternatively, images may be received for only a portion of the entire area of a sample or object. For instance, images for a predefined area may be received, comprising about 100, 200, 300, 400, 500, 600, 700, 800, 900, 1000, 2000, 4000, 6000, 8000, 10000, 15000, 20000, 25000, 30000, 35000, 38000, 40000, 43000, 45000, 50000, 60000 or 70000 $\mu m^2$ or images may comprise 0.001, 0.1, 0.5, 1, 5, 10, 15, 20, 25, 30, 35, 40, 45, 50, 55, 60, 65, 70, 75, 80, 85, 90 or 95% of the entire area of a sample or object. The entire area of a sample or object may depend on the size of the substrate used. Typically, sizes of between about 1000 $\mu m^2$ to about 6 $cm^2$, preferably between about 10 $mm^2$ and 5 $cm^2$ may be used. If more than one image per sample or object is received, several small areas may be scanned until a certain predefined area has been examined, e.g. 50%, 75% or 100% of the entire area of a sample or object. Such a scanning process may include the analysis of overlapping regions between images or the analysis of non-overlapping regions. In the case of overlapping scanning the same area may preferably be analyzed a second time only after a regeneration time in order to circumvent photo-bleaching effects. Several or all images of one sample or one sample area may be collected, combined, compared and/or associated in order to establish values for the overall number of cells and/or other parameters of cells present in the sample.

Images received from an objective or received from the object to be analyzed directly may be received and/or captured in color, grayscale or black-and-white. The presence or absence of colors may, for example, be adjusted by using corresponding filters e.g. in the optical path and/or in any suitable grabbing or capturing unit, e.g. a CCD or digital camera. One or more colors may selectively be filtered by specific filter elements, e.g. blue, yellow, green, red etc. according to their wavelength. Selective filters may also be combined, e.g. pair-wise or as combinations of 3 or more filters.

Correspondingly obtained images may be stored on suitable storage devices, e.g. computer hard-disks, CDs, DVDs, diskettes, provided as live-footage e.g. on TV screens, printed out, e.g. on paper or in the form of photographic pictures or transmitted into electronic networks via any suitable means known to the person skilled in the art.

Based on an image obtained via the capturing or grabbing of electromagnetic radiation as defined herein above, preferably based on an UV radiation reaction image as defined herein above, at least one of several parameters of structures on the image or content of the image may be established or determined. Among these parameters are preferably the size of a cell, the morphology of a cell, the number of cells, the ratio between cytoplasm and nucleus of a cell and the optical density of the nucleus of a cell or the optical density of the cytoplasm or any other structural element of a cell.

The term "morphology of a cell" as used herein refers in general to the form, structure and configuration of a cell and may include aspects of the cell appearance like shape, color or pattern of internal or external part of a cell. The term "form of a cell" as used herein refers to typical cell forms like circular cells, elliptic cells, shmoo like cells, division forms like dumbbells, star-like cell forms, flat cells, scale-like cells, columnar cells, invaginated cells, cells with concavely formed walls, cells with convexly formed walls, the presence of prolongations, appendices or cilia, the presence of angles or corner etc. Typical morphologies or forms would be known to the person skilled in the art and can be derived from Junqueira et al., 2002, Basic Histology, Mcgraw-Hill editors.

The "size of a cell" as used herein may be determined in relation to a calibration mark, in relation to the size of neighboring cells, the size of all cells present on a given image or the size of cells derivable from a suitable histological database comprising data of cell sizes. Preferably, the size of a cell may be calculated in relation to a defined or established area of the image, e.g. an area comprising about 100, 200, 300, 400, 500, 600, 700, 800, 900, 1000, 2000, 4000, 6000, 8000, 10000, 15000, 20000, 25000, 30000, 35000, 38000, 40000, 43000, 45000, 50000, 60000 or 70000 $\mu m^2$. The determination of the size of a cell also encompasses in a specific embodiment the determination of the ratio between the surface area and the volume of a cell.

The "number of cells" as used herein may be determined in relation to a defined or established area of the image, e.g. an area comprising about 100, 200, 300, 400, 500, 600, 700, 800, 900, 1000, 2000, 4000, 6000, 8000, 10000, 15000, 20000, 25000, 30000, 35000, 38000, 40000, 43000, 45000, 50000, 60000 or 70000 $\mu m^2$.The determination of the number of cells may also encompass the determination of the number of cells in one cell layer, e.g. if tissues comprising more than one cell layer are analyzed. Alternatively, the number of cells in all cell layers may be determined. In such a case the number of cells per cell or tissue layer may be determined by additionally determining the number of cell layers present in the object to be analyzed, i.e. the biological sample.

The term "ratio between cytoplasm and nucleus of a cell" as used herein refers to a comparison of the area of cytoplasm and the area of nuclei present in said cytoplasm of an UV radiation reaction image according to the present invention. The area of cytoplasm may or may not comprise cell well areas or internal cell structures like vacuoles, mitochondrial etc. The area of nuclei may or may not comprise nuclear membrane districts. In case more than one nucleus should be present in a cell, either the area of one nucleus may be determined or the area of all nuclei present may be determined. The ratio of cytoplasm and nucleus of a cell may be determined for each cell individually or for any grouping or sub-grouping of cells present in a defined area of the image, e.g. an area comprising about 100, 200, 300, 400, 500, 600, 700, 800, 900, 1000, 2000, 4000, 6000, 8000, 10000, 15000, 20000, 25000, 30000, 35000, 38000, 40000, 43000, 45000, 50000, 60000 or 70000 $\mu m^2$.

The term "optical density" as used herein refers to the measure of the transmittance of an optical element for a given length at a given wavelength $\lambda$, preferably according to the formula:

$$OD_\lambda = \log_{10} O = -\log_{10} T = -\log_{10}\left(\frac{I}{I_0}\right)$$

wherein

O = the per-unit opacity

T = the per-unit transmittance $I_O$ = the intensity of the incident beam of electromagnetic radiation

I = the intensity of the transmitted beam of electromagnetic radiation

In a specific embodiment, the optical density of a nucleus of a cell in comparison to the optical density of a nucleus of a second cell may be determined.

Furthermore, the optical density of a nucleus of a cell in comparison to the optical density of the cytoplasm of a cell or vice versa may be determined. Furthermore, the optical density of all nuclei in a defined area of the image and/or of all cytoplasmic regions in a defined area of the image may be determined.

In addition or alternatively the color of a cell, the color of a nucleus and/or the color of a cell wall may be determined, preferably in combination with the usage of specific filters, e.g. color or wavelength filters as mentioned herein above. Alternatively or in addition the number and form of internal cellular structures may be determined, e.g. the number and form of vacuoles, the number and form of mitochondria, division related structures like chromosomal structures etc. may be determined. In a particularly preferred embodiment of the present invention the form, size or morphology of the nucleus and/or the location of the nucleus within the cell may be determined as an alternative or additional parameter. For instance, the nucleus may have a flattened, elliptical, round, shmoo like, dumbbell-like or star-like form. The nucleus may, for instance, be located in the corner of a cell, in the middle of a cell, in the upper or lower part of a cell, it may be cell-wall standing or there may be space between the nucleus and the cell wall. Furthermore, the association of cells or the degree of independence of cells may be determined. Moreover, the volume of a cell, the proportion of the length of the cell wall to the cell size, the number of identical or similar cells in an image, the number of ruptures, fissures, holes or visible pores in a cell may be determined.

The term "identical or similar cell" as used herein refers to cells which show the same size, the same number of ruptures, fissures, holes or visible pores etc, the same volume, the same proportion of the length of the cell wall to the cell size, the same color, the same size of nuclei etc. The term "same" as used herein refers to a percentage of identity of at least 55%, 60% or 65%, more preferably at least 70 %, 75%, 80%, 85%, 90%, 91%, 92%, 93%, 94%, 95%, 96%, 97%, 98%, 99% or 100% of two parameters if compared individually, e.g. by forming a quotient of a determined value or parameter.

Based on the outcome of the establishment of a parameter as defined herein above, preferably of the size of a cell, the morphology of a cell, the number of cells, the ratio between cytoplasm and nucleus of a cell and the optical density of the nucleus of a cell or the optical density of the cytoplasm or any other structural element of a cell the percentage of epithelial cells present on the captured image of the electromagnetic radiation as defined herein above, i.e. the UV radiation reaction image, may be determined.

The term "epithelial cell" as used herein refers to a cell from a region at the outside and/or inside surface of cavities or lumen and/or at surfaces of structures throughout an organism. Preferably, the term relates to a cell from a region comprising the inner and/or outer surface of the skin, of the lung, the gastrointestinal tract, the reproductive tract, the urinary tract, the exocrine glands, the endocrine glands, the cornea, the blood vessels, the heart, the lymphatic vessels, the walls of the pericardium, of the pleurae or of the peritoneum of an organism, in particular of a mammalian body, most preferably of the human body. Epithelial cells may comprise squamous, cuboidal or columnar cells. The cells may additionally or alternatively be either simple, stratified or pseudostratified. Furthermore, the cells may additionally or alternatively be keratinized or ciliated. Examples of epithelial cells according to the present invention include simple squamous cells derived from blood vessels, stratified columnar cells derived from ducts of submandibular glands, stratified keratinized and squamous cells derived from attached gingiva, stratified keratinized and squamous cells derived from the dorsum of the tongue, stratified keratinized and squamous cells derived from hard palate, stratified non-keratinized and squamous cells derived from the esophagus, simple columnar and non-ciliated cells derived from the stomach, simple columnar and non-ciliated cells derived from the small intestine, simple columnar and non-ciliated cells derived from the large intestine, simple columnar and non-ciliated cells derived from the rectum, stratified non-keratinized and squamous cells derived from the anus, simple columnar and non-ciliated cells derived from the gallbladder, simple cuboidal cells derived from thyroid follicles, simple cuboidal cells derived from ependyma, simple squamous cells derived from lymph vessels, stratified keratinized and squamous cells derived from superficial layers of the skin, glandular cells, stratified cuboidal cells derived from gland ducts, simple squamous cells derived from the mesothelium of body cavities, simple cuboidal cells derived from ovaries, simple ciliated and columnar cells derived from fallopian tubes, simple ciliated and columnar cells derived from the uterus, simple columnar cells derived from the endometrium, simple columnar cells derived from the cervix, squamous cells derived from the cervix, stratified squamous cells derived from the cervix, stratified non-keratinized and squamous cells derived from the cervix, stratified non-keratinized and squamous cells derived from the vagina, stratified keratinized and squamous cells derived from the labia majora, simple cuboidal cells derived from the tubuli recti, simple cuboidal cells derived from the rete testis, pseudostratified columnar cells derived from the tubuli efferentes, pseudostratified columnar cells derived from the epididymis, pseudostratified columnar cells derived from the vas deferens, simple columnar cells derived from the ejaculatory duct, simple columnar cells derived from the bulbourethral glands, pseudostratified columnar cells derived from the seminal vesicle, stratified non-keratinized and squamous cells derived from the oropharynx, pseudostratified columnar cells derived from the larynx, stratified non-keratinized and squamous cells derived from the trachea, simple cuboidal cells derived from the repiratory bronchioles, stratified non-keratinized and squamous cells derived from the cornea, pseudostratified columnar cells from the nose, simple cuboidal cells from the proximal convoluted tubule of the kidney, simple squamous cells derived from the ascending thin limb of the kidney, simple cuboidal cells derived from the distal convoluted tubule of the kidney, simple cuboidal cells derived from the collecting ducts of the kidney, pseudostratified columnar cells derived from membranous urethra, pseudostratified columnar cells derived from penile urethra or stratified squamous cells derived from external urethral orifice.

The determination of the percentage of epithelial cells present in an image according to the present invention may be a determination of the number of epithelial cells in comparison to the overall number of cells or the number of non-epithelial cells present in the image. In a further embodiment of the present invention the number of epithelial cells may also be compared to the number of specific other cell groups, e.g. the number of blood cells, white blood cells, muscle or contractile cells, metabolism and storage cells, or neuron or neural cells. Such a determination may lead to a differential description of cell types present in a biological sample.

In a specific embodiment of the present invention the percentage of specific epithelial cells within the group of epithelia cells, or in comparison to the overall number of cells or in comparison to other non-epithelial cell groups, e.g. blood cells, white blood cells, muscle or contractile cells, metabolism and storage cells, or neuron or neural cells may be determined based on at least one of the parameters as defined herein above, e.g. the size of a cell, the morphology of a cell, the number of cells, the ratio between cytoplasm and nucleus of a cell and the optical density of the nucleus of a cell or the optical density of the cytoplasm or any other structural element of a cell the percentage. For instance, the percentage of simple, stratified, pseudostratified, keratinized, ciliated, cuboidal or columnar cells may be determined.

In a specific embodiment of the present invention epithelial cells may be distinguished from white blood cells via parameters like cell size, cell morphology, size and optical density of nuclei, the ratio between cytoplasm and nucleus of a cell etc. The term "white blood cell" as used herein refers to lymphocytes, granulocytes, macrophages, neutrophiles, eosinophiles, basophiles, monocytes and dendritic cells. The distinction may be carried out by determining the percentage of epithelial cells as defined herein above from the overall number of cells and by determining the percentage of white blood cells from the overall number of cells, or by comparing the number of epithelial cells and the number of white blood cells.

In a further specific embodiment of the present invention the epithelial cell as mentioned herein above is a squamous cell or a glandular cell. The term "squamous cell" as used herein refers to a flat epithelial cell found in epithelial tissue, which has a fish scale-like form. Squamous cells typically either form a single layer of epithelial tissue and are hence classified as simple squamous cells, or form multiple layers and are hence classified as stratified squamous cells. Squamous cells may be kreatinized or non-kreatinized. Typically, the individual cells are smooth, flat and very thin, as well as soft. They tend to fit closely together in tissues, providing a smooth, low-friction surface over which fluids can move easily. Squamous cells are typically rather poorly active in terms of metabolism, but may be active in terms of diffusion of water and specific substances through certain tissues. Furthermore, squamous cells tend to have horizontal flattened, elliptical nuclei, mainly due to the thin flattened form of the cell. Squamous cells may be found in several epithelial regions of an organism, e.g. at the inner surfaces of blood vessels, at the filtration tubules, at the surface of the major cavities found within the body like the esophagus, the vagina, the cervix etc., as well as in the alveoli of the lungs. Further details on squamous cells would be known to the person skilled in the art or can be derived from qualified textbooks like Junqueira et al., 2002, Basic Histology, Mcgraw-Hill editors. Based on these data, in particular the size and morphology of the cells and/or their association, the size and morphology of the nuclei and their distribution or localization within the cells etc., the identity and/or percentage of squamous cells in a biological sample may be determined.

The term "glandular cell" as used herein refers to a columnar epithelial cell which typically occurs in one or more layers. The cells are typically elongated and column-shaped and the nuclei are elongated and are usually located near the base of the cells. Glandular cells may have the form of goblet cells, which may secrete mucus or slime. A glandular cell epithelium may consist of a large number of goblet cells and only a few normal epithelial cells interspersed. Typically, columnar epithelial cells tend to become specialized as gland cells which are capable of synthesizing and secreting certain substances such as enzymes, hormones, milk, mucus, sweat, wax and saliva. Unicellular glands generally consist of single, isolated glandular cells, e.g. in the form of goblet cells. Alternatively a portion of an epithelial tissue may become invaginated resulting in the formation of a multicellular gland. Multicellular glands are composed of clusters of glandular cells, which have columnar morphology, but must not necessarily be in the form of goblet cells. Glandular cells may be found throughout an organism, e.g. in the skin, the vagina, on the tongue, in the duodenum, in the penis, in the eye, in the esophagus, in the pancreas, in the stomach, in the digestive tract, in the respiratory tract, in the conjunctiva, in the urethra, in the breast, in the eyelids, in the cervix, in the nose, in the small intestine or in the ileum. Further details on glandular cells would be known to the person skilled in the art or can be derived from qualified textbooks like Junqueira et al., 2002, Basic Histology, Mcgraw-Hill editors. Based on these data, in particular the size and morphology of the cells and/or their association, the size and morphology of the nuclei and their distribution or localization within the cells etc., the identity and/or percentage of glandular cells in a biological sample may be determined.

In a further preferred embodiment of the present invention the percentage and/or presence of squamous metaplastic cells may be determined. The term "squamous metaplastic cell" refers to a sub-form of a squamous cell as defined herein above, which is smaller than a typcial squamous cell, has a round cell form and/or a denser cytoplasm than typcial squamous cells. Squamous metaplastic cells may specifically be counted and distinguished from other squamous cells and/or from epithelial cells in general and/or from all cells present in a sample.

In a preferred embodiment of the present invention the UV radiation reaction image is obtained with an UV microscope. The term "UV microscope" as used herein refers to any type of microsopic equipment capable of producing and/or modifying and/or capturing UV radiation reaction images. The term includes microspectrometers, microspectro-photometers, microscope spectrometers, microscope spectrophotometers, microscope photometers, microphotometers, cytospectrophotometers, cytospectrometers, microfluorimeters, microfluorometer, Raman microspectrometer and classical UV microscopes etc. Preferred are UV microscopes obtainable from Craic Technologies, Edmund Optics, Olympus, Keyence, McCrone, Zeiss, Nikon, Leica or Special Optics, Inc.

In a further preferred embodiment of the present invention the UV radiation reaction image may be obtained at a wavelength of between about 200 nm and 400 nm. The radiation reaction image may be obtained, for example, at a wavelength, of 200, 210, 220, 230,240,245,248,250,254,260,263,270,280,290,300,310,320,330,340,350,360, 365, 370, 380, 390 or 400 nm. Particularly preferred is the use of a wavelength of about 248, 254, 260, 280 or 365 nm. One or more of the indicated wavelengths may be used for the analysis of one object to be analyzed. E.g. first a wavelength of about 260 nm may be used and subsequently a wavelength of 280 nm may be used. Such a procedure may be advantageous if the cytoplasm's visibility is too low at 260 nm. A switch to 280 nm or to any other, higher wavelength may correspondingly increase the absorption of proteineaous cell structures.

An analysis based on the above indicated wavelengths may in a further embodiment of the present invention also be combined with the use of visible light, e.g. wavelengths of about 400 nm to 750 nm or the use of infrared light, e.g. wavelengths of 750 nm to 100 $\mu$m. Such a combination may be carried out simultaneously, e.g. by applying electromagnetic radiation of two different wavelengths at the same time or subsequently.

In a further preferred embodiment of the present invention the size of a cell, the morphology of a cell, the number of cells, the ratio between cytoplasm and nucleus of a cell and/or the optical density of the nucleus of a cell present on a UV radiation reaction image as defined herein above is established with a means for image and/or form recognition. A "means for image and/or form recognition" may be any unit, apparatus or device capable of determining the a value indicative of the size of a cell, the morphology of a cell, the number of cells, the ratio between cytoplasm and nucleus of a cell and/or the optical density of the nucleus of a cell and/or any of the additional parameters mentioned herein above if provided with an input in the form of an UV radiation reaction image as described herein above. Preferably such a means for image and/or form recognition is configurable and/or configured to determine a value indicative of the size of a cell, the morphology of a cell, the number of cells, the ratio between cytoplasm and nucleus of a cell and/or the optical density of the nucleus of a cell.

In a particularly preferred embodiment in a method of assessment of the present invention the image and/or form recognition may be carried out with a recognition data processor, a recognition software or a recognition program. These data processors, recognition software or recognition programs may measure and quantify one, more or all of the parameters mentioned herein above, e.g. a value indicative of the size of a cell, one or more values indicative of the morphology of a cell, the number of cells, the ratio between cytoplasm and nucleus of a cell and/or the optical density of the nucleus of a cell etc. The measurement or quantification may be carried out automatically upon arrival of image data or may require supervision by an operator. Data processing may also include the detection of background noise and a corresponding correction of the values for said background noise. Subsequently, the measured values may be stored or presented in suitable forms, e.g. graphs, tables, statistics etc.

A statistical evaluation and data-mining of the values and parameters may additionally or alternatively be carried out, using suitable statistical approaches and tests. Obtained values or parameter information may also be compared with previously stored values, e.g. values obtained from a repetition of the measurement or values obtained in an analysis of a different sample.

Examples of corresponding image and/or form recognition and processing programs, which may be used in the context of the present invention, are Mathematica Digital Image Processing, EIKONA, or Image-PRO. Examples of statistical programs, which may be used in the context of the present invention, include SPSS, NCSS or PASS.

In a further preferred embodiment of the present invention the method for the assessment of a biological sample as defined herein above comprises as additional step (d) the comparisons of the results obtained via the determination of cellular parameters as defined herein above and/or via the determination of the percentage of epithelial cells, in particular squamous and/or glandular cells with a reference database. The term "reference database" as used herein refers to any suitable collection of data comprising information on at least one of the above mentioned parameters, including cell size, cell morphology, number of cells in a defined area, optical density of the nucleus of cell, ratio between cytoplasm and nucleus of a cell, color of a cell, color of a nucleus, color of a cell wall, number and form of internal cellular structures like the number and form of vacuoles, the number and form of mitochondria, division related structures like chromosomal structures, form, size, morphology of the nucleus and/or the location of the nucleus within the cell, association of cells, the degree of independence of cells, volume of a cell, proportion of the length of the cell wall to the cell size, number of identical or similar cells in an image, or number of ruptures, fissures, holes or visible pores in a cell. The corresponding information may be stored in any suitable format and may be accessed during and/or after the step of establishing the cellular parameter according to the present invention and/or the determination of the percentage of epithelial cells, in particular squamous and/or glandular cells. The comparison process may be carried out automatically, e.g. by using suitable software packages or programs able to access information from a database or information collection. Alternatively, the parameters may be compared manually, i.e. by an operator.

The reference parameters or the reference information may additionally or alternatively be stored in the form of predefined threshold values, which allow a fast and reliable comparison of measured values with predefined default values, e.g. of specific cell or tissue type. Once such threshold values are not met, an alert or information signal may be generated informing the practitioner or operator about a sub-optimal or not met parameter criterion.

In a special embodiment of the present invention the practitioner may compare the parameters obtained in the establishing step of the method of the present invention as described herein above with a database or collection of information in order to find out, whether epithelial cells are present. This step may also be carried out by automated processes or software tools. Alternatively, in a further embodiment, the practitioner may compare the percentage of epithelial cells, determined in step (c) of the method of the present invention as described herein above, with a database or collection of information in order to find out, whether the percentage of epithelia cells is typical for a biological sample, in particular for a specific biological sample obtained from certain zones, areas or tissues of an organism, e.g. the lungs, the skin, the uterus, the cervix etc. This step may also be carried out by automated processes or software tools. Furthermore, both comparison steps may be combined, i.e. first the parameters of step (b) may be compared to a database or information collection and subsequently, e.g. based on the outcome of such a comparison operation, the determined percentage of epithelial cells (step (c)), in particular of squamous and/or glandular cells, may be compared to a database or information collection.

Based on the outcome of such a comparison step a practitioner or operator may decide on the quality of a biological sample, i.e. whether a biological sample is suitable or usable for additional analysis steps, e.g. for a more detailed histological examination. Thus, in a special embodiment the present invention relates to the use of corresponding comparison results for the decision on the suitability of a biological sample for molecular, histological or microscopic etc. examinations or analyses. The practitioner or operator may also decide, based on the outcome of the comparison, whether it is necessary to repeat a sample-taking procedure. The conclusion on the quality of the biological sample and its usability may be drawn in close temporal proximity of the sample-taking. For instance, if the sample is taken, a comparison result may be available within a few minutes, e.g. within 5, 10, 15, 20, 25, 30, 40 or 45 minutes. This temporal proximity is highly advantageous since it avoids the cumbersome repetition of the sample-taking procedure at a second sitting, but instead allows a repetition of the sample-taking during the same sitting, should the quality of the sample not match a predefined level.

The quality, suitability or usability of a biological sample after a comparison step with a reference database or reference information may be determined to be sub-optimal or insufficient, if a predefined reference value is under-run by at most 5% to 10%. Reference values and the corresponding suitability criteria may be adjusted with regard to the biological sample to be analyzed, the cell type of interest, the number of cells present etc. If, for instance, the percentage of squamous and/or glandular cells is to be determined, a percentage of at least 10%, preferably of at least 20%, 30%, 40% or 50% more preferably of at least 60%, 70% or 80% squamous and/or glandular cells of the overall number of cell may be considered as a quality cut-off value, which may only be under-run by at most 2%, 3%, 4% or 5% in order to meet the suitability criteria of a biological sample. Also the absolute number of epithelial cells, more preferably of squamous and/or glandular cells, in the analyzed sample may be used as alternative or additional criterion for deciding on the quality, suitability or usability of a biological sample. For example, if an image area, e.g. a predefined sub-portion of the entire area of a substrate to be analyzed as mentioned herein above, comprises at least about 80, 90, 100, 110, 120, 130, 140 or 150 epithelial cells, preferably squamous and/or glandular cells, the suitability criteria of a biological sample may be considered to be met. In a particularly preferred embodiment, if the number of epithelial cells, e.g. squamous and/or glandular cells, in the entire area of the substrate analyzed is at least about 100, the suitability criteria of a biological sample may be considered to be met.

A further criterion for deciding on the quality, suitability or usability of a biological sample, which may be used alternatively or, preferably in addition to the number of squamous and/or glandular cells, is the distribution of squamous and/or glandular cells over the image area. For example, if at least 10%, preferably 20%, 30%, 40%, more preferably 50%, 60%, 70% or 80% or most preferably 90% of an image area, e.g. the entire area of substrate to be analyzed, or a predefined sub-portion thereof as mentioned herein above, shows detectable or recognizable squamous and/or glandular cells, preferably detectable or recognizable according to the criteria mentioned herein above, the suitability criteria of a biological sample may be considered to be met. This cut-off value may only be under-run by at most 2%, 3%, 4% or 5%.

In a further embodiment of the present invention the criteria for deciding on the quality, suitability or usability of a biological sample, in particular with respect to the minimum number of cells and/or with regard to cell types, may be derived from Diane Solomon and Ritu Nayar: "The Bethesda System for Reporting Cervical Cytology. Definitions, Criteria, and Explanatory Notes" Second Edition, Springer New York, 2004, pages 3 to 11.These criteria may be used exclusively or in addition to one or more of the further criteria mentioned herein above or below.

In a further particularly preferred embodiment of the present invention the quality, suitability or usability of a cervical smear sample, e.g. a Pap smear sample, in particular with respect to the minimum number of cells and/or with regard to cell types, may be determined according to criteria derivable from Diane Solomon and Ritu Nayar: "The Bethesda System for Reporting Cervical Cytology. Definitions, Criteria, and Explanatory Notes" Second Edition, Springer New York, 2004, pages 3 to 11.

In another particularly preferred embodiment of the present invention the criteria for quality, suitability or usability of a sample from thyroid, salivary glands, pancreas or prostate, in particular from fine needle aspirations of nodules in the thyroid, salivary glands, pancreas or prostate may be considered to be met if an image area, e.g. a predefined sub-portion of the entire area of a substrate to be analyzed as mentioned herein above, preferably the entire area of the substrate analyzed comprises at least about 100 epithelial cells.

In a preferred embodiment of the present invention the reference database to be used for a comparison operation as described herein above is the British Society for Clinical Cytology (BSCC) look-up table or the Bethesda System database (Bethesda system for reporting cervical/vaginal cytological diagnoses, Acta Cytol. , 1993, 37, 115). Alternatively, reference databases or information collections from pathology organizations like the American Society for Clinical Pathological (ASCP), the American Society for Colposcopy and Cervical Pathology (ASCCP), the European Board of Pathology, the German Society of Pathology or the European Society of Pathology etc.

In a further embodiment of the present invention the biological sample may be a sample derived from a portion or part of a biological organism, e.g. from superficial zones or internal zones of an organism. Preferably, the biological sample may be obtained from epithelial regions of an organism, i.e. from regions which line the outside and/or inside of cavities, lumen and/or surfaces of structures throughout an organism. Particularly preferred are regions comprising the skin, lung, gastrointestinal tract, reproductive tract, urinary tract, exocrine glands, endocrine glands, cornea, inner lining of blood vessels, inner lining of the heart, lymphatic vessels, walls of the pericardium, pleurae or peritoneum of an organism, in particular of a mammalian body, most preferably of a human body. Furthermore, biological samples according to the present invention may be derived from blood, sweat, sputum or saliva, semen and urine, as well as feces or stool of an organism, preferably an animal, more preferably a mammal and most preferably a human being. Furthermore, the biological sample may contain a cell extract derived from or a cell population including epithelial cells. Sample cells may further be purified from obtained body tissues and fluids if necessary, and then used as the biological sample.

The samples may be taken by any suitable method known to the person skilled in the art. The sample used in the context of the present invention should preferably be collected in a clinically acceptable manner, more preferably in a way that cells, cellular structures or tissue associations are preserved. Particularly preferred are tissue samples like biopsy or resection samples, brushing samples or fine-needle-aspiration samples. Fine-needle-aspiration samples may preferably be taken in the form of biopsies, e.g. from salivary glands, thyroid tissue, lymph-nodes, breasts, the pancreas, the liver or the prostate. Brushing samples may preferably be taken from cornea, conjunctiva, oral mucosa, the larynx, the bronchi, the esophagus or bile ducts. Specific techniques for taking brushing samples or fine-needle-aspiration samples would be known to the person skilled in the art and may be performed according to suitable guidelines provided, for example, by pathological societies or health care organizations.

In a specific embodiment of the present invention samples may be pooled. However, non-pooled samples may preferably be used. Furthermore, the content of a biological sample may be submitted to an enrichment step. For instance, a sample may be contacted with ligands specific for cell membrane elements, surface structures etc. of certain cell types, e.g. epithelial cells. Alternatively, samples may be centrifuged or may be submitted to magnetic enrichment procedures. Fluid samples, e.g. blood, urine or sweat samples, may be enriched via filtration processes. Such filtration processes may also be combined with enrichment steps as described herein above.

In a further embodiment of the present invention control samples may be used, e.g. samples comprising a defined number of cells or specific cell types, in particular squamous or glandular cells. Such control samples may, for example, be used for calibration and/or comparison purposes, e.g. the known number of cells or any other measurable and known parameter may be used in order to calibrate image and/or form recognition programs or processes. I.e. if a certain, predefined and known value is not reached, internal measurement parameters like the contrast, color portions etc. may be modified and/or adjusted in order to improve the measurement quality. Such correction processes may be performed according to algorithms known to the person skilled in the art or may alternatively be performed manually by a operator, which can adjust, as an example, the contrast of a UV radiation reaction image, or its color proportions etc.

In a particularly preferred embodiment of the present invention the biological sample is a smear sample. The term "smear sample" as used herein refers to the recovery of cells or tissues or tissue portions by abating and detaching parts of an organism, preferably of the human body. A practitioner or operator may use suitable devices or materials, e.g. speculums, scoops, cotton buds, rods, brushes etc. After the cells, tissues or tissue portions have been abated or detached they may be provided on suitable presentation units, e.g. substrate slides like glass slides etc. This may be done in the form of spreading out the cells on the substrate.

In an even more preferred embodiment of the present invention the smear sample is a cervical smear sample. The term "cervical smear sample" as used herein refers to a smear sample obtained from the cervix, e.g. the endocervix, endocervical canal, internal os, ectocervix, enternal os or cervical crypts of an organism, preferably of a human being. A sample may additionally comprise cells from neighboring tissues like the uterus, the endometrium or the vagina etc. Typically, a practitioner or operator may insert a speculum, scoop, cotton bud, rod, brushes etc. into the vagina to obtain samples from the cervix or cervical structures as mentioned herein above. The obtainment of such samples may be performed during the entire menstrual cycle, including a menstrual period. Cervical smear samples may be taken in accordance with guidelines and techniques provided for Pap smear samples or Papanicolaou samples.

In a specific embodiment of the present invention the method of assessment of a biological sample as described herein above may be implemented in a modified Papanicolaou testing scheme. E.g. the first steps of the testing scheme including the assessment of the smear may be replaced by an assessment according to the present invention.

In a further specific embodiment of the present invention sample cells may be stained before obtaining a UV radiation reaction image. Preferably, a cell staining may be employed which allows obtaining UV radiation reaction images, i.e. a cell staining which does not influence the UV radiation absorbance, reflection, transmission or fluorescence. Such a staining may allow for an integrated quality assessment and histological examination of a sample, e.g. for the presence of abnormal or cancerous cells. For instance, a staining as used for Papanicolaou tests may be used, allowing for an integrated quality assessment of the sample and histological examination of the cells, e.g. for the presence of abnormal or cancerous cells.

In a further aspect the present invention relates to a device, comprising a means for obtaining a UV radiation reaction image, a means for establishing the size of a cell, the morphology of a cell, the number of cells, the ratio between cytoplasm and nucleus of a cell and the optical density of the nucleus of a cell present on said UV radiation reaction image; and a means for determining the percentage of epithelial cells of cells present on said UV radiation reaction image. A "means for obtaining a UV radiation reaction image" may comprise a source of electromagnetic radiation with a wavelength shorter than that of visible light, but longer than x-rays. The source of the electromagnetic radiation may be at the opposite side of the object to be analyzed, resulting in transmitted or non-absorbed or non-reflected radiation arriving at the receiving unit. Alternatively, the source of electromagnetic radiation may be located at the same side as the object to be analyzed, resulting in reflected radiation arriving at the receiving unit. Also encompassed is a source of electromagnetic radiation which is at a lateral position, wherein the direction of radiation is emitted in a direction having an angle of between about 45° to 135°, preferably about 90° with respect to the object to be analyzed. The terms "opposite side", "same side" etc. have been defined herein above in the context of the method of the present invention. Sources of electromagnetic radiation may be any suitable radiation source known to the person skilled in the art, for instance, a UV lamp or a laser light source or a set of laser light sources emitting UV light of a wavelength of between 10 nm to 400 nm, and/or energies from about 3 eV to 124 eV. Examples of electromagnetic radiation sources to be used in the context of the present invention are a mercury UV lamp, preferably a low-pressure mercury UV-lamp or a high-pressure mercury UV-lamp, or a laser light source or a set of laser light sources emitting, inter alia or exclusively, UV light, e.g. a broad band laser. The electromagnetic radiation source may also be a LED lamp, e.g. an UV-LED lamp. The means for obtaining a UV radiation reaction image may further comprise one or more optical elements which are capable of concentrating and/or focusing the radiation. Preferably, one or more lenses and/or one or more condensor units etc. may be present. In a typical embodiment several lenses or condensers which vary in their maximum and minimum numerical aperture and/or the diameter of the aperture may be used and/or combined. Such elements may be positioned in a suitable distance to the source of electromagnetic radiation and/or the object to be analyzed. The distance may be varied according to the optical elements used, the wavelength of the electromagnetic radiation, the type of radiation source used and/or the nature of the object to be analyzed. The means for obtaining a UV radiation reaction image may accordingly comprise elements and devices which allow a variation of the distance between the optical elements, the source of radiation and the object to be analyzed. The means for obtaining a UV radiation reaction image may additionally comprise elements, e.g. optical elements or structures which receive electromagnetic radiation from the object to be analyzed, typically via reflection or transmission of radiation, via fluorescence or radiation which has not been absorbed by the object. An example of such an element is an objective, i.e. an element which gathers the radiation coming from an object being observed, and focuses the rays to produce a real image. Objectives present in a means for obtaining UV radiation may be characterized by two parameters, namely the magnification and the numerical aperture. The magnification may have any suitable value. Typically it will range from 5× to 10.000×. The numerical aperture may also have any suitable value, typically ranging from 0.14 to 1.3. As objective any suitable objective known to the person skilled in the art may be used. Examples of specific objective types which are contemplated by the present invention are non-immersion or normal objectives, oil-immersion objectives and water-immersion objectives. Depending on the type of objective the preparation and/or presentation of the biological sample may be adapted. For example, in order to use oil-immersion objectives or techniques, the samples and/or a cover-slip between the sample and the objective, as well as the objective itself may be immersed in oil, preferably in a transparent oil of high refractive index. In order to use, for instance, water-immersion objectives or techniques, the samples and/or a cover-slip between the sample and the objective, as well as the objective itself may be immersed in water. The numerical aperture of the objective may be adapted according to the technique used, e.g. for water-immersion approaches the numerical aperture may preferably be between 1 and 1.3. Additionally or alternatively filter elements may be present, which are capable of filtering certain wavelengths or wavelength spectra or of reducing the energy of electromagnetic radiation. Such filter elements may be present between the source of electromagnetic radiation and the object to be analyzed or between the object to be analyzed and an image grabbing unit. As filter any suitable filter known to the person skilled in the art may be used. Examples of filters to be used are a UV A filter, a UV B filter, a filter for visible light, polarization filters etc. A means for obtaining a UV radiation reaction image may further comprise a sample holding or presentation device. Such a sample holding device may be movable in at least one, two or three directions and may be suitable for exactly positioning and/or stabilizing a sample within the means for obtaining a UV radiation. Preferably, it may be suitable for positioning a sample in an optical path. Furthermore, a means for obtaining a UV radiation reaction image may comprise image capturing or grabbing elements or devices. For instance, it may comprise a suitable photographic and/or picture/image recording unit. Examples of such units are a CCD camera, a digital optical camera, a mechanical or optical camera etc. These image capturing or grabbing elements may preferably be positioned in the optical path, capable of receiving radiation coming from the object to be analyzed. A means for obtaining a UV radiation reaction image may additionally comprise protection elements in order to avoid radiation exposure of operators. It may further be combined to secondary elements, e.g. computer systems, data processing units, computer networks, storage devices, TV screens etc.

In a preferred embodiment of the present invention the means for obtaining a UV radiation reaction image is a UV microscope, i.e. any type of microscopic equipment capable of producing and/or modifying and/or capturing UV radiation reaction images, including microspectrometers, microspectrophotometer, microscope spectrometers, microscope spectrophotometers, microscope photometers, microphotometers, cytospectrophotometers, cytospectrometers, microfluorimeters, micro fluorometer, Raman microspectrometer and classical UV microscopes etc. Particularly preferred are UV microscopes obtainable from Craic Technologies, Edmund Optics, Olympus, Keyence, McCrone, Zeiss, Nikon, Leica or Special Optics, Inc.

In a further preferred embodiment of the present invention the means for obtaining a UV radiation reaction image is a UV microscope using radiation of a wavelength of about 200 to 400 nm. The radiation may, for example, have a wavelength of 200, 210, 220, 230,240,245,248,250,254,260,263,270,280,290,300,310,320,330,340,350,360, 365, 370, 380, 390 or 400 nm. Particularly preferred is a microscope using radiation of a wavelength of about 248, 254, 260, 280 or 365 nm. A microscope may further be capable of using different wavelengths or a wavelength spectrum. The means for obtaining a UV radiation reaction image may further be or comprise a device using radiation of the visible light spectrum, e.g. wavelengths of about 400 nm to 750 nm or infrared light, e.g. wavelengths of 750 nm to 100 $\mu$m.

A "means for establishing the size of a cell, the morphology of a cell, the number of cells, the ratio between cytoplasm and nucleus of a cell and the optical density of the nucleus of a cell present on said UV radiation reaction image" is a device, tool or equipment capable of determining values indicative for the size of a cell, the morphology of a cell, the number of cells, the ratio between cytoplasm and nucleus of a cell and the optical density of the nucleus of a cell. The device may receive UV radiation reaction images from the means for obtaining a UV radiation reaction image as defined herein above and process these images according to defined schemes, procedures or algorithms. E.g. for a given image parameters as defined herein above include the amount of cells present, the amount of nuclei present, the length of the cell walls, the color or the cells, the density of the cellular structures, the proportion of cellular compartments etc. may be determined based on the information derivable form the image. In a preferred embodiment a means for establishing the size of a cell, the morphology of a cell, the number of cells, the ratio between cytoplasm and nucleus of a cell and the optical density of the nucleus of a cell present on said UV radiation reaction image is a computer, electronic device or data processing unit capable of performing picture and/or form recognition. Typically, such a computer, electronic device or data processing unit is capable of carrying out suitable picture and/or form recognition algorithms. Such an algorithm may, for example, be included in suitable software packages for picture and/or form recognition, e.g. Mathematica Digital Image Processing, EIKONA, or Image-PRO. Results of such recognition processes may in the same device also be further assessed with regard to statistical significance, e.g. by carrying out suitable statistical programs, e.g. SPSS, NCSS or PASS.

A "means for determining the percentage of epithelial cells of cells present on said UV radiation reaction image" as used herein is a data processor, electronic device or computer device capable of performing comparison calculations based on an input derived from a cell and/or form recognition device. Such comparison calculations may preferably be a calculation based on suitable comparison algorithms known to the person skilled in the art. Thus, in a preferred embodiment a means for determining the percentage of epithelial cells of cells present on said UV radiation reaction image is a computer or electronic device capable of performing a comparison algorithm.

Comparison operations to be carried out may also comprise the comparison of obtained or determined values with values derived from a reference database, preferably the BSCC look-up table. Such comparison operations may be included during the determination of the cellular parameters and/or during and/or after the calculation of the percentage of epithelial cells present on the UV radiation reaction image.

In a specific embodiment a device according to the present invention may comprise a UV microscope as defined herein above, preferably using a wavelength of 260 nm or 280 nm, an image grabber, preferably a CCD camera or digital camera, an image acquisition or storage element and a computer or electronic device capable of performing image and form recognition and comparison procedures or algorithms. Furthermore, a comparison procedure with a reference database may be implemented; such a comparison procedure is preferably based on predefined cut-off values for one or more parameters, in particular for the percentage of epithelia cells present in the image or the biological sample which was analyzed. Subsequently, a device according to the present invention may provide a conclusion on the quality of the biological sample.

In a further aspect the present invention relates to the use of a device as described herein above for the assessment of a biological sample. A device as described herein above may preferably be used for the assessment and/or quality control of a tissue sample, a biopsy sample, a brushing sample, a fine-needle-aspiration sample, or a smear sample. Particularly preferred is a use of said device for a cervical smear sample, e.g. a Papanicolaou smear sample as described herein above.

The present invention also encompasses the use of certain elements of a device according to the present invention for assessment or quality control purposes. For example, UV radiation reaction images obtainable with a means for obtaining UV radiation reaction images, e.g. a UV microscope, may be used for documentation purposes or for consultation purposes within a medical network or between practitioners. Alternatively, already stored UV radiation reaction images or UV radiation reaction images available in different, independent forms or formats, e.g. as print outs, slides etc. may be used for the determination of cellular parameters and/or the calculation of the percentage of epithelial cells.

The following example and the figures are provided for illustrative purposes. It is thus understood that the example and figures are not to be construed as limiting. The skilled person in the art will clearly be able to envisage further modifications of the principles laid out herein.

EXAMPLE

In order to obtain UV radiation reaction images a UV microscope with image acquisition was used.

The sample to be analyzed was derived from oral epithelial cells. The cells were provided in the form of a smear sample. For sample taking a clean, sterile brush was used. It was swabbed several times against the inside of a human patient's cheek and subsequently smeared over a quartz microscope slide. The sample was left for drying in air for several minutes. The sample was not additionally fixated and not stained.

A UV radiation reaction image was obtained by using UV radiation at a wavelength of 248 nm.

As can be derived from Fig. 4 the UV radiation provides a clear image of epithelial cells which allow a straightforward differentiation between cells and nuclei, as well as the determination of several parameters like the size of a cell, the ratio between cytoplasm and nucleus etc.

**Claims**

1.  Method for the assessment of a biological sample, comprising the steps of:

    (a) obtaining a UV radiation reaction image of a biological sample;
    (b) establishing at least one of the following parameters:

        the size of a cell, the morphology of a cell, the number of cells, the ratio between cytoplasm and nucleus of a cell and the optical density of the nucleus of a cell present on said UV radiation reaction image; and

    (c) determining the percentage of epithelial cells present on said UV radiation reaction image based on the outcome of step (b).

2.  The method of claim 1, wherein said UV radiation reaction image is obtained with an UV microscope.

3.  The method of claim 1 or 2, wherein said UV radiation reaction image is obtained at a wavelength of between about 250 nm to 300 nm, preferably at about 260 nm or about 280 nm.

4. The method of any one of claims 1 to 3, wherein the size of a cell, the morphology of a cell, the number of cells, the ratio between cytoplasm and nucleus of a cell and/or the optical density of the nucleus of a cell present on said UV radiation reaction image is established with a means for image and/or form recognition, which is preferably configured to determine a value indicative of the size of a cell, the morphology of a cell, the number of cells, the ratio between cytoplasm and nucleus of a cell and/or the optical density of the nucleus of a cell.

5. The method of claim 4, wherein said means for image and/or form recognition is a picture and/or form recognition data processor, software or program.

6. The method of any one of claims 1 to 5, wherein said epithelial cell is a squamous cell or a glandular cell.

7. The method of any one of claims 1 to 6, wherein said method comprises as additional step (d) comparing the outcome of steps (b) and/or (c) with a reference database.

8. The method of claim 7, wherein said reference database is the British Society for Clinical Cytology (BSCC) look-up table or the Bethesda System database.

9. The method of any one of claims 1 to 8, wherein said biological sample is a tissue sample, a biopsy sample, a brushing sample, a fine-needle-aspiration sample or a smear sample.

10. The method of claim 9, wherein said smear sample is a cervical smear sample.

11. A device, comprising a means for obtaining a UV radiation reaction image, a means for establishing the size of a cell, the morphology of a cell, the number of cells, the ratio between cytoplasm and nucleus of a cell and the optical density of the nucleus of a cell present on said UV radiation reaction image; and a means for determining the percentage of epithelial cells of cells present on said UV radiation reaction image.

12. The device of claim 11, wherein said means for obtaining a UV radiation reaction image is a UV microscope, preferably a UV microscope using radiation of a wavelength of about 250 to 300 nm, more preferably using radiation of a wavelength of about 260 nm or about 280 nm.

13. The device of claim 11 or 12, wherein said means for establishing the size of a cell, the morphology of a cell, the number of cells, the ratio between cytoplasm and nucleus of a cell and the optical density of the nucleus of a cell present on said UV radiation reaction image is a data processing unit, a computer or an electronic device capable of performing a picture and/or form recognition algorithm.

14. The device of any one of claims 11 to 13, wherein said means for determining the percentage of epithelial cells of cells present on said UV radiation reaction image is a data processing unit, a computer or an electronic device capable of performing a comparison algorithm.

15. Use of the device of any one of claims 11 to 14 for the assessment of a biological sample, preferably of a tissue sample, a biopsy sample, a brushing sample, a fine-needle-aspiration sample, more preferably of a smear sample, most preferably of a cervical smear sample.

Fig. 1

Fig. 2

Fig. 3

Fig. 4

Europäisches
Patentamt

European
Patent Office

Office européen
des brevets

# EUROPEAN SEARCH REPORT

Application Number

EP 09 16 4184

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 675 768 A (LEGORRETA-SANCHEZ GILDARDO) 11 July 1972 (1972-07-11) * abstract * * column 4, line 20 - line 46 * * column 2, line 26 - line 44 * * column 5, line 5 - line 73 * * column 7, line 32 - line 41 * * figure 1 * | 1-15 | INV. G06K9/00 |
| X | US 2004/038320 A1 (BANERJEE BHASKAR [US]) 26 February 2004 (2004-02-26) * paragraph [0010] - paragraph [0011] * * paragraph [0058] * * paragraph [0063] - paragraph [0065] * * paragraph [0073] - paragraph [0082] * * figures 4-7 * | 1-15 | |
| X | US 2002/115121 A1 (GARWIN JEFFREY L [US]) 22 August 2002 (2002-08-22) * paragraph [0046] - paragraph [0050] * * Tables 1 and 2; paragraph [0074] - paragraph [0145] * | 1-15 | |
| A | J. Slavik: In: Wilkinson et al.: "Digital image analysis of microbes" 1998, John Wiley & Sons , XP002560668 , pages 113-114 * Section 4.8. * | 3 | TECHNICAL FIELDS SEARCHED (IPC) G06K |
| A | WO 96/09608 A (NEOPATH INC.) 28 March 1996 (1996-03-28) * abstract * * page 2, line 35 - page 4, line 20 * * page 14, line 13 - page 17, line 10 * | 1-15 | |

-/--

The present search report has been drawn up for all claims

| Place of search | Date of completion of the search | Examiner |
|---|---|---|
| The Hague | 17 December 2009 | Grigorescu, Cosmin |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt

European
Patent Office

Office européen
des brevets

## EUROPEAN SEARCH REPORT

Application Number

EP 09 16 4184

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 96/09604 A1 (NEOPATH INC [US]) 28 March 1996 (1996-03-28) * page 1, line 28 - page 2, line 13 * | 1-15 | |
| A | A. HERBERT ET AL.: "European guidelines for quality assurance in cervical cancer screening: recommendations for cervical cytology terminology" CYTOPATHOLOGY, vol. 18, no. 4, 18 July 2007 (2007-07-18), pages 213-219, XP002560669 * p. 214, Section "Specimen adequacy" * | 1-15 | |
| A | ARBYN ET AL. (EDS): "European guidelines for quality assurance in cervical cancer (second edition)" INTL. AGENCY FOR RESEARCH ON CANCER, [Online] 2008, pages 88-89, XP002560916 Retrieved from the Internet: URL:http://bookshop.europa.eu/eubookshop/download.action?fileName=ND7007117ENC_002.pdf&eubphfUid=10027853&catalogNbr=ND-70-07-117-EN-C> [retrieved on 2009-12-17] * Section 3.6.1 * | 1-15 | TECHNICAL FIELDS SEARCHED (IPC) |

The present search report has been drawn up for all claims

| Place of search | Date of completion of the search | Examiner |
|---|---|---|
| The Hague | 17 December 2009 | Grigorescu, Cosmin |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons

& : member of the same patent family, corresponding
      document

EPO FORM 1503 03.82 (P04C01)

**ANNEX TO THE EUROPEAN SEARCH REPORT
ON EUROPEAN PATENT APPLICATION NO.**

EP 09 16 4184

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-2009

| Patent document cited in search report | | Publication date | Patent family member(s) | | Publication date |
|---|---|---|---|---|---|
| US 3675768 | A | 11-07-1972 | NONE | | |
| US 2004038320 | A1 | 26-02-2004 | NONE | | |
| US 2002115121 | A1 | 22-08-2002 | US 2009004690 A1 | | 01-01-2009 |
| | | | US 2005079561 A1 | | 14-04-2005 |
| | | | US 2005233410 A1 | | 20-10-2005 |
| WO 9609608 | A | 28-03-1996 | AU 707925 B2 | | 22-07-1999 |
| | | | AU 3676395 A | | 09-04-1996 |
| | | | CA 2200454 A1 | | 28-03-1996 |
| | | | DE 791206 T1 | | 12-11-1998 |
| | | | EP 0791206 A1 | | 27-08-1997 |
| | | | ES 2121567 T1 | | 01-12-1998 |
| | | | GR 98300052 T1 | | 31-07-1998 |
| | | | JP 10506462 T | | 23-06-1998 |
| | | | US 5715327 A | | 03-02-1998 |
| WO 9609604 | A1 | 28-03-1996 | AU 3586195 A | | 09-04-1996 |
| | | | US 5978498 A | | 02-11-1999 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Williams et al.** *Proc. Natl. Acad. Sci. USA,* 1998, vol. 95, 14932
- **Drezek et al.** *J. of Biomedical Optics,* 2001, vol. 6, 385
- Bethesda system for reporting cervical/vaginal cytological diagnoses. *Acta Cytol.,* 1993, vol. 37, 115
- Papanicolaou staining, $\times$400 magnification, grayscale reproduction. *Am. J. Clin. Pathol,* 2008
- **Junqueira et al.** Basic Histology. Mcgraw-Hill, 2002
- **Diane Solomon ; Ritu Nayar.** The Bethesda System for Reporting Cervical Cytology. Definitions, Criteria, and Explanatory Notes. Springer, 2004, 3-11
- *Acta Cytol.,* 1993, vol. 37, 115